# EUROPEAN PATENT SPECIFICATION

(11) **EP 1 415 243 B1**
(45) Date of publication and mention of the grant of the patent: **24.06.2009**
(21) Application number: 00982330.3
(22) Date of filing: 30.11.2000
(51) Int. Cl.: G06F 17/30

(54) **DYNAMIC CONTENT BASED ASSISTED INFORMATION BROWSING**
DYNAMISCHES NAVIGIEREN IN INFORMATIONEN MIT AUF DEM INHALT BASIERENDER HILFE
RECHERCHE D'INFORMATION ASSISTEE EN FONCTION DE SON CONTENU DYNAMIQUE

(30) Priority: 30.11.1999 US 452328
(43) Date of publication of application: 06.05.2004
(60) Divisional application: 07017021.2
(73) Proprietor: Hall Aluminum LLC, Los Altos, CA 94022 (US)
(72) Inventor: PORTER, Swain, W., Kirkland, WA 98034 (US)
(74) Representative: Leinweber & Zimmermann
(86) International application number: PCT/US2000/032667
(87) International publication number: WO 2001/041001

(56) References cited:
- EP-A- 0 943 982
- L.LEE GILES, KURT D. BOLLACKER, STEVE LAWRENCE: "CiteSeer: An Automatic Citation Indexing System" DIGITAL LIBRARIES 98 - THIRD ACM CONFERENCE ON DIGITAL LIBRARIES, EDITED BY I. WITTEN, R. AKSCYN, F.SHIPMAN III, ACM PRESS, [Online] 1998, pages 89-98, XP002258918 New York Retrieved from the Internet: <URL:http://citeseer.nj.nec.com/cs> [retrieved on 2003-10-23]
- BOLLACKER K D ET AL: "CITESEER: AN AUTONOMOUS WEB AGENT FOR AUTOMATIC RETRIEVAL AND IDENTIFICATION OF INTERESTING PUBLICATIONS" PROCEEDINGS OF THE 2ND INTERNATIONAL CONFERENCE ON AUTONOMOUS AGENTS MINNEAPOLIS/ST.PAUL, MN, MAY 9 - 13, 1998, PROCEEDINGS OF THE INTERNATIONAL CONFERENCE ON AUTONOMOUS AGENTS, NEW YORK, NY: ACM, US, 9 May 1998 (1998-05-09), pages 116-123, XP000887406 ISBN: 0-89791-983-1

## Description

### BACKGROUND OF THE INVENTION

### 1. Field of the Invention

The present invention relates to the field of computerized information retrieval and browsing. More specifically, the present invention relates to methods and apparatuses associated with dynamic content based assistance provided to facilitate information retrieval and browsing.

### 2. Background Information

With the recent advances in microprocessor, telecommunication and networking technology, increasing number of computer systems are being networked together through private and public networks, such as the Internet. Volumes of information stored on information servers (such as web servers of the World Wide Web) are now available to users of computer systems with a few clicks of a mouse button. For many users, the ease of access has actually created an information overload situation. Early solution has been to categorize as much of the information available as possible, such as the directory or index services offered by Internet portals like Yahoo and Lycos. Even then, a simple search restricted to one categorization could still result in hundreds of potential hits, requiring a large amount of user time to sort out the useless from the useful. As a result, users are frustrated, and information technology are prevented from realizing its full potential in reaching the ubiquitous state.

Various automated techniques in assisting a user in retrieving and browsing information have been proposed and/or experimented. In U.S. Patent 5,727,129, entitled "Network system for profiling and actively facilitating user activities", issued to Barrett et al, a system and method for assisting a user in accessing information stored at remote network sites was disposed. Under Barrett, an archive is maintained of remote sites accessed and instances in which the same remote sites are accessed in sequence. Statistics regarding information such as the number of times a site has been accessed, and the times a given set of sites have been accessed in sequence are maintained. Based on this information, information items are identified which the user is predicted to be likely to want to access. In U.S. Patent 5,360,429, entitled "Multiple reference hotlist for identifying frequently retrieved web pages", issued to Peercy et al, a method and apparatus for locating web pages was disclosed. Under Peercy, a count of retrievals of a web page is accumulated and the accumulated count and an address for the web page are stored in a record of a history log database. A multiple reference hotlist is formatted for the user from the records in the history log.

D1 (L.LEE GILES, KURT D. BOLLACKER, STEVE LAWRENCE: ,CiteSeer: An Automatic Citation Indexing System" DIGITAL LIBRARIES 98 - THIRD ACM CONFERENCE ON DIGITAL LIBRARIES, EDITED BY I. WITTEN, R. AKSCYN, F. SHIPMAN III, ACM PRESS, [Online] 1998, pages 89-98, XP002258918) discloses an automatic citation indexing system. For instance, this automatic citation indexing system can retrieve all documents cited in a given paper. The other way round, it may provide a list of papers that cite the given paper. Accordingly, browsing indexes of academic literature in electronic formate will be supported. Further, CiteSeer may find related documents to a given document. The sources of said related documents are dynamically assembled and additionally displayed on a display of a client system. In order to find these related documents, a method is disclosed using knowledge about document components or structures, for instance the citation information.

Each of these prior art techniques has its pros and cons. Thus, additional techniques that can further improve the ease of information retrieval and browsing, even in limited circumstances, are desired.

### SUMMARY OF THE INVENTION

An automated method performed in a server system for facilitating provision of assistance for a user of a networked client system to retrieve and browse information is provided by the features set out in claim 1.

Further, advantageous embodiments of the invention are claimed in the subclaims 2 to 4.

### BRIEF DESCRIPTION OF DRAWINGS

The present invention will be described by way of exemplary embodiments, but not limitations, illustrated in the accompanying drawings in which like references denote similar elements, and in which:
**Figure 1** illustrates an overview of the present invention;
**Figure 2** illustrates the browser and the augmented dynamic content based assistance functions and databases of **Fig. 1** in further detail in accordance with one embodiment;
**Figures 3a-3b** illustrate one embodiment each of the related keyword database and related information source database of **Fig. 2****;**
**Figure 4** illustrates a manner for designating a current table pair, in accordance with one embodiment;
**Figure 5** illustrates a method of the present invention in accordance with one embodiment;
**Figures 6a-6d** illustrate four network embodiments for practicing the present invention in accordance with four embodiments; and
**Figure 7** illustrates an example digital system suitable for practicing the present invention.

### DETAILED DESCRIPTION OF THE INVENTION

In the following description, various aspects of the present invention will be described. However, it will be apparent to those skilled in the art that the present invention may be practiced with only some or all aspects of the present invention. For purposes of explanation, specific numbers, materials and configurations are set forth in order to provide a thorough understanding of the present invention. However, it will also be apparent to one skilled in the art that the present invention may be practiced without the specific details. In other instances, well known features are omitted or simplified in order not to obscure the present invention.

Parts of the description will be presented using terms such as tables, keys, identifiers and so forth, commonly employed by those skilled in the art to convey the substance of their work to others skilled in the art. Parts of the description will be presented in terms of operations performed by a computer system, using terms such as parsing, accessing, retrieving, and so forth. As well understood by those skilled in the art, these quantities take the form of electrical, magnetic, or optical signals capable of being stored, transferred, combined, and otherwise manipulated through mechanical and electrical components of a digital system; and the term digital system include general purpose as well as special purpose data processing machines, systems, and the like, that are standalone, adjunct or embedded.

Various operations will be described as multiple discrete steps performed in turn in a manner that is most helpful in understanding the present invention, however, the order of description should not be construed as to imply that these operations are necessarily order dependent, in particular, the order the operations are presented. Furthermore, the phrase "in one embodiment" will be used repeatedly, however the phrase does not necessarily refer to the same embodiment, although it may.

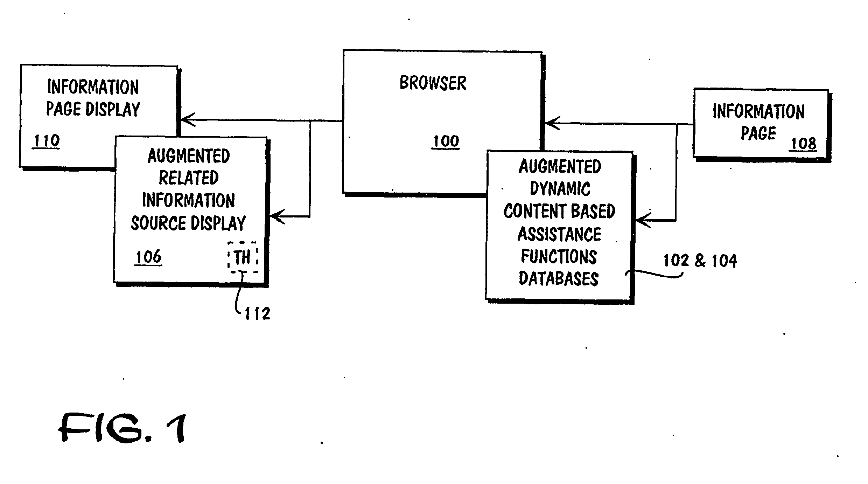

Referring now to **Figure 1****,** wherein an overview of the present invention is shown. As illustrated, in accordance with the present invention, browser **100** is augmented with a number of functions **102** and databases **104** to provide dynamic content based assistance to a user to retrieve and browse information pages. More specifically, functions **102** and databases **104** enable browser **100** to facilitate augmented provision of a number of dynamically assembled other information source identifiers **106** based at least in part on dynamically determined contents of information page **108.** (The display of information page **108** is illustrated as information page display **110**.) Information page **108** is intended to represent a broad range of informational units known in the art, including but not limited to information "documents" formed using mark-up languages, such as HTML and XML. In one embodiment, functions **102** further enable browser **100** to provide thumbnails **112** of information pages corresponding to provided information source identifiers **108.** A thumbnail of an information page, as described in more detail below, is a dithered down image of the information page. Thumbnails **112** are provided to enable the user to have a rough overview of what the information page is about. In one embodiment, a thumbnail is provided in response to a user event, such as when a user proximately placing a cursor "next" to an information source identifier. What constitutes "proximately placed" is application dependent.

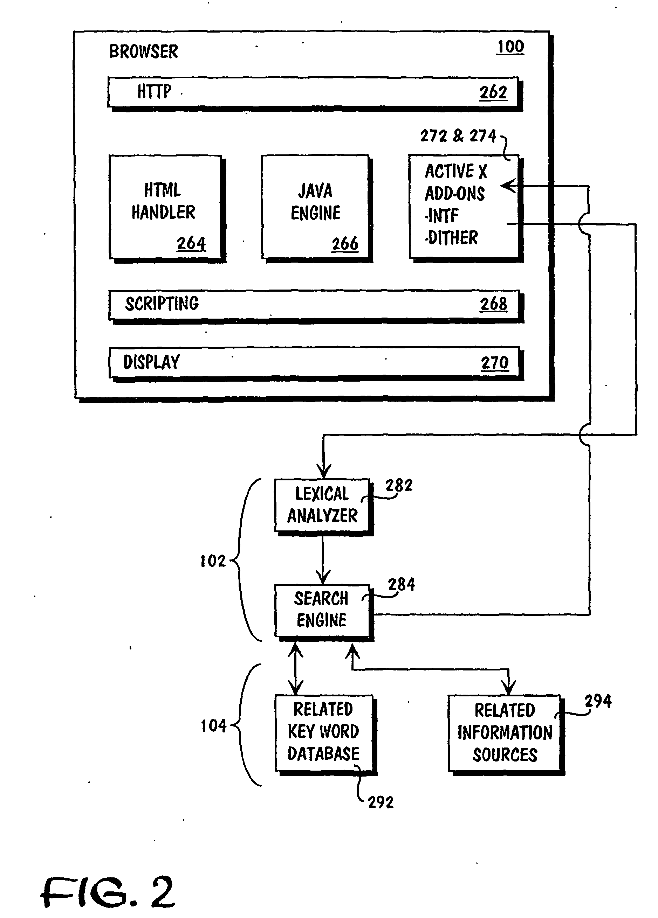

**Figure 2** illustrates browser **100** as well as augmented functions **102** and databases **104** in further detail, in accordance with one embodiment. As illustrated, browser **100** includes conventional elements found in many browsers known in the art, HTTP interface **262,** HTML web page handler **264,** JAVA^{™} and JavaScript execution engine **266,** other script interpreter **268** (e.g. CGI), display interface **270,** and a number of "plug-ins" (or add-ons), shown as additional Active-X components **272-274.** Included among these Active-X components **272-274** is a component **272** that interfaces with selected ones of augmented functions **102,** and a dithering module **274.** Augmented functions **102** include lexical analyzer **282** and search engine **284,** and augmented databases **104** include related keyword database **292** and related information sources database **294.**

Lexical analyzer **282,** for the illustrated embodiment, is used to determine in real time, unique nouns presence in the information page browsed. In alternate embodiments, lexical analyzer **282** may be used to determine presence of other types of words/terms presence in the information page, e.g. words/terms that are specially tagged.

Search engine **284** is used to determine in real time, presence of certain keywords in the information page being browsed, for the illustrated embodiment, using unique nouns outputs by lexical analyzer **282.** More specifically, search engine **284** uses the unique nouns to access related keyword database **292** to determine if any of the unique nouns are keywords of interest. Search engine **284** is additionally used to determine in real time, related keywords for the presence ones of the keywords of interest in the information page being browsed. For the illustrated embodiment, search engine **284** makes the determination by retrieving the related keywords stored in related keyword database **292** for a keyword of interest, when a unique noun matches the keyword of interest. Search engine **284** is further used to determine in real time, the information source identifiers to be provided in view of the determined related keywords. For the illustrated embodiment, search engine **284** makes the determination by retrieving the information source identifiers from database **294** using the determined related keywords.

Lastly, as described earlier, add-on dithering module **274** is used to dither a retrieved one of the information pages identified by the augmented information source identifiers, to generate a thumbnail for the information page. In one embodiment, both the retrieval and dithering of the information page are performed when the thumbnail is needed. In another embodiment, the information page is pre-fetched, and the dithering is performed when the thumbnail is needed. In yet another embodiment, the information page is pre-fetched and the dithering is performed in advance before the thumbnail is needed.

Except for the role they play to collectively facilitate practice of the present invention, in and of the themselves, each of the enumerated functions, interface **272,** dithering module **274,** lexical analyzer **282,** and searching engine **284** are generally known in the art, and may be implemented using any one of a number of techniques and programming languages known. Accordingly, they will not be otherwise further described.

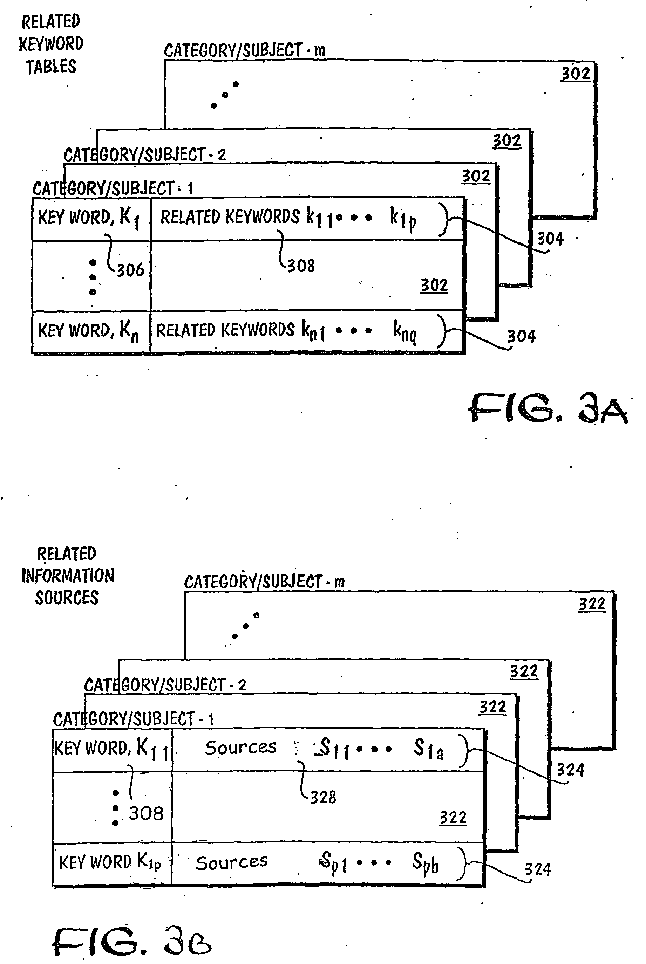

**Figures 3a-3b** illustrate one embodiment each of related keyword database **292** and information source database **294.** For the illustrated embodiment, related keyword database **292,** as shown in **Fig. 3a****,** is constituted with a number of tables **302.** Stored inside each table **302** are related keyword entries **304.** Each related keyword entry **304** includes related keywords **308** for a keyword of interest **306.** Similarly, for the illustrated embodiment, information source database **294,** as shown in **Fig. 3b****,** is constituted with a number of tables **322.** Stored inside each table **322** are information source entries **324.** Each information source entry **324** includes information source identifiers **328** for a related keyword **308.**

For the illustrated embodiment, keywords of interest **306** (and therefore, their related keywords **308** and associated information source identifiers **328**) are organized by categories or subjects. For examples, a series of tables may contain related keywords for various keywords of interest for Biology, Physics, Chemistry, History, Literature, and so forth; another series of tables may contain related keywords for various keywords of interest for Doctors, Dentists, Lawyers, Accountants, Financial Advisers, and so forth, and yet another series of tables may contain related keywords for various keywords of interest for Classical Music, Rock and Roll Music, Country Western Music, and so forth. There is no limitation to how the tables may be organized.

For the illustrated embodiment, one of the corresponding table pairs **302** and **322** is designated as the "current" table pair. During operation, search engine **284** accesses only table **302** of the designated "current" table pair to determine whether certain keywords of interest are presence in an information page being browsed. The associated information source identifiers for each determined presence ones of keywords of interest are retrieved from the corresponding information source table **322** of the designated "current" table pair.

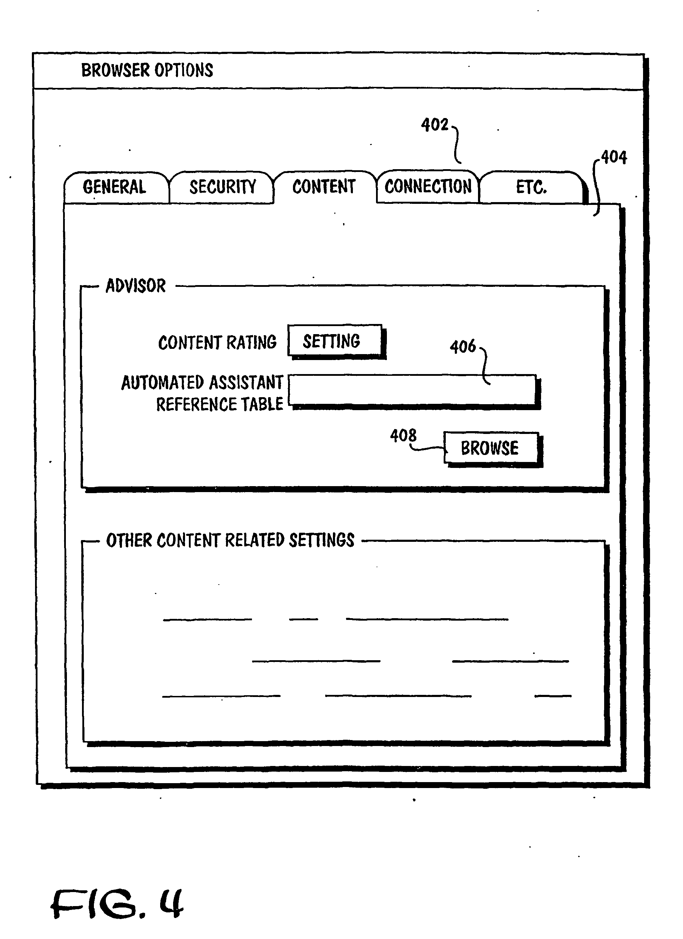

**Figure 4** illustrates a manner in which the "current" table pair may be designated, in accordance with one embodiment. The manner illustrated is similar to the "tab" based pop-up approach in setting browser or software options in general. For the illustrated embodiment, option "pop up" **402** includes tab page **404** for setting various content related options. Among the various settable content related options is field **406** for entering the name of the keyword of interest and information source table pair to be designated as the "current" table pair. Field **406** has associated browse button **408** for displaying a list of table-pairs available for selection. The approach is basically known in the art, accordingly, will not be otherwise further described.

The information contained in the various tables may be tabulated manually or using an automated process or a combination of both, by a vendor. The tabulation may be repeated periodically to continually refine the keywords of interest, their relationship to other keywords, as well as the associated information sources.

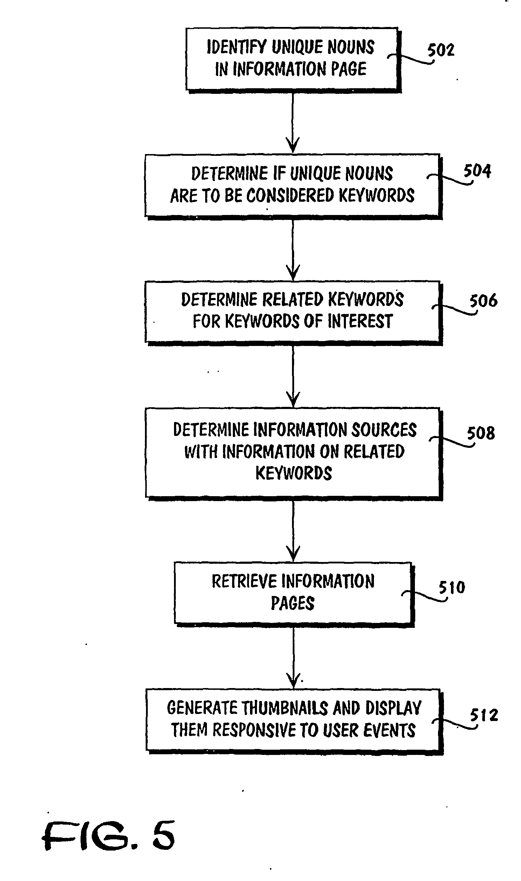

**Figure 5** illustrates a method of the present invention, in accordance with one embodiment. As illustrated, at **502,** unique nouns of an information page are identified. In the earlier described embodiment, the identification is performed by the lexical analyzer. At **504,** the unique nouns are determined if they are to be considered as keywords of interest. In the earlier described embodiment, this is performed by the search engine accessing the related keyword database. At **506,** the related keywords are determined for the presence ones of the keywords of interest. In the earlier described embodiment, this is also performed by the search engine accessing the related keyword database. At **508,** the associated information sources, i.e. their identifiers, are identified for each of the retrieved related keywords for the presence ones of the keywords of interest. In the earlier described embodiment, this is performed by the search engine accessing the information source database.

At **510,** the information pages corresponding to the retrieved information source identifiers are pre-fetched. In one embodiment, this is performed by the browser itself. At **512,** the retrieved information pages are dithered to generate the thumbnails to have them available for use on demand. In the earlier described embodiment, this is performed by the add-on dither module.

While for ease of understanding, the method has been described with the operations being performed one after the other, first the unique nouns are determined, then the keywords of interest are determined, as so forth. Those skilled in the art will appreciate that in alternate embodiments, the various operations may be performed in an overlapped or interleaving manner. That is, as soon as a unique noun is determined, whether it is a keyword of interest may be determined, without awaiting all unique nouns to be determined. Likewise, once a keyword of interest is identified, its related keywords may be determined, without awaiting all keywords of interest to be identified. These principles apply equally to all the later operations.

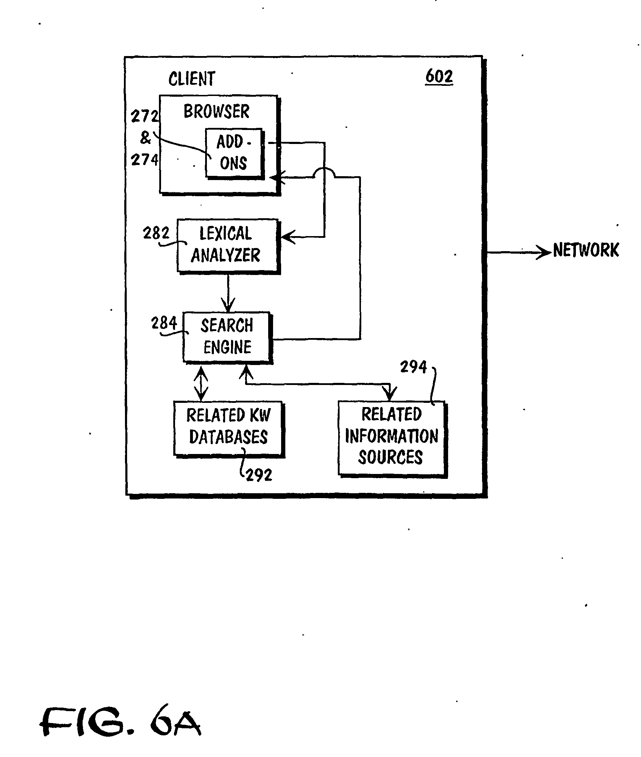

**Figures 6a-6d** illustrate four example network environments for practicing the present invention in accordance with four embodiments. The embodiment of **Fig. 6a** represents an embodiment, where all the relevant earlier described elements, i.e. add-on interface and dither modules **272** and **274,** lexical analyzer **282,** search engine **284,** and databases **292** and **294** are all provided to a client system **602** coupled to a network (e.g. the Internet). These relevant elements may be loaded onto client system **602** via a distribution medium (not shown) or downloaded from a distribution server (not shown). Note that a user may load/download only a subset of databases **292** and **294** tabulated by a vendor, or load/download them from multiple vendor sources.

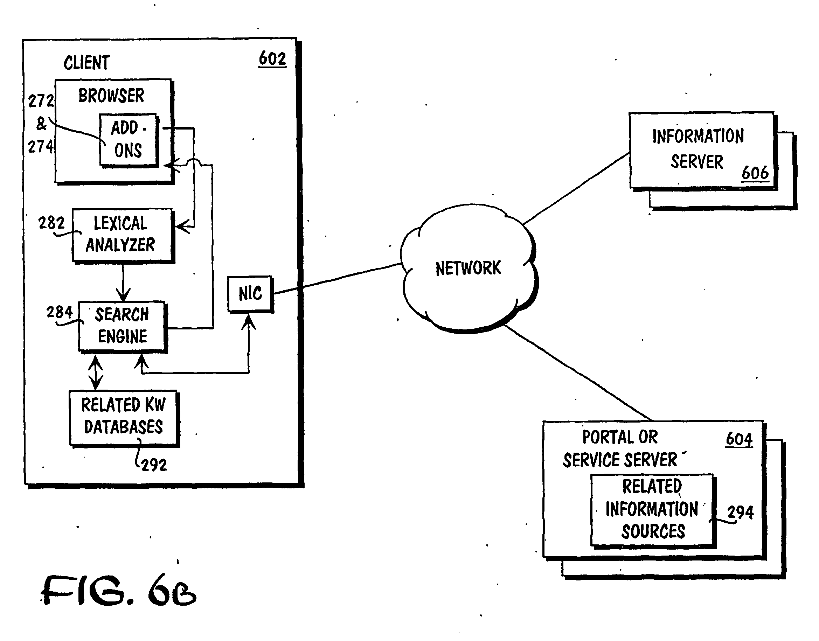

The embodiment of **Fig. 6b** represents an alternate embodiment, where except for information source database **294,** all other relevant earlier described elements, i.e. add-on interface and dither modules **272** and **274,** lexical analyzer **282,** search engine **284,** and databases **292** are provided to a client system **602** coupled to a network (e.g. the Internet). Information source database **294** is disposed on portal or service server **604** instead. During operation, upon determining the related keywords, search engine **284** would access database **294** remotely to retrieve the associated information source identifiers.

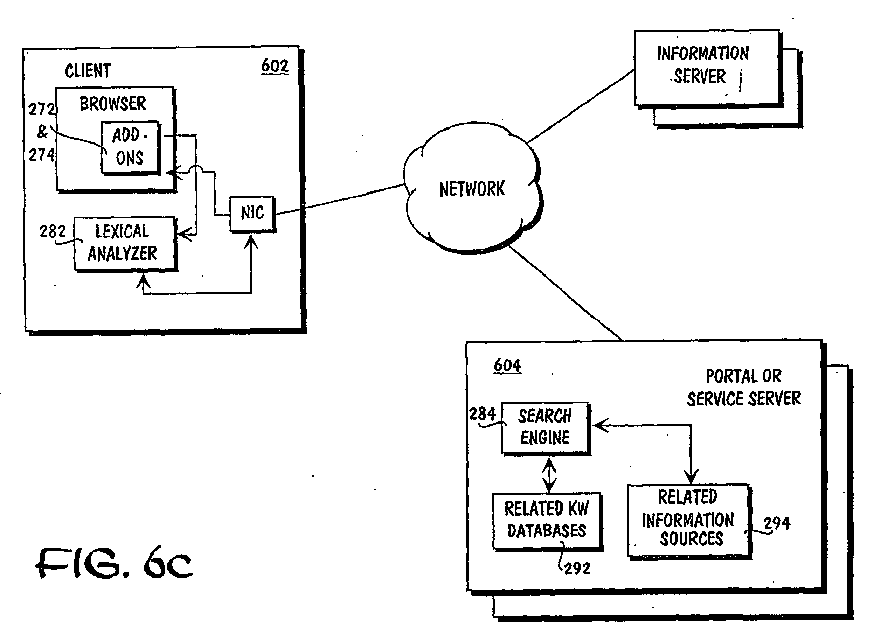

The embodiment of **Fig. 6c** represents yet another alternate embodiment, where only add-ons **272** and **274** and lexical analyzer **282** are provided to a client system **602** coupled to a network (e.g. the Internet). Otherwise, search engine **284,** and databases **292** and **294** are disposed on portal or service server **604** instead. During operation, upon determining the unique nouns, lexical analyzer **282** would provide the unique nouns to search engine **284** on serer **604** instead. Search engine **284,** in turn determines the keywords of interest, their related keywords, and ultimately the associated information source identifiers, and provide them to client **602,** as described earlier.

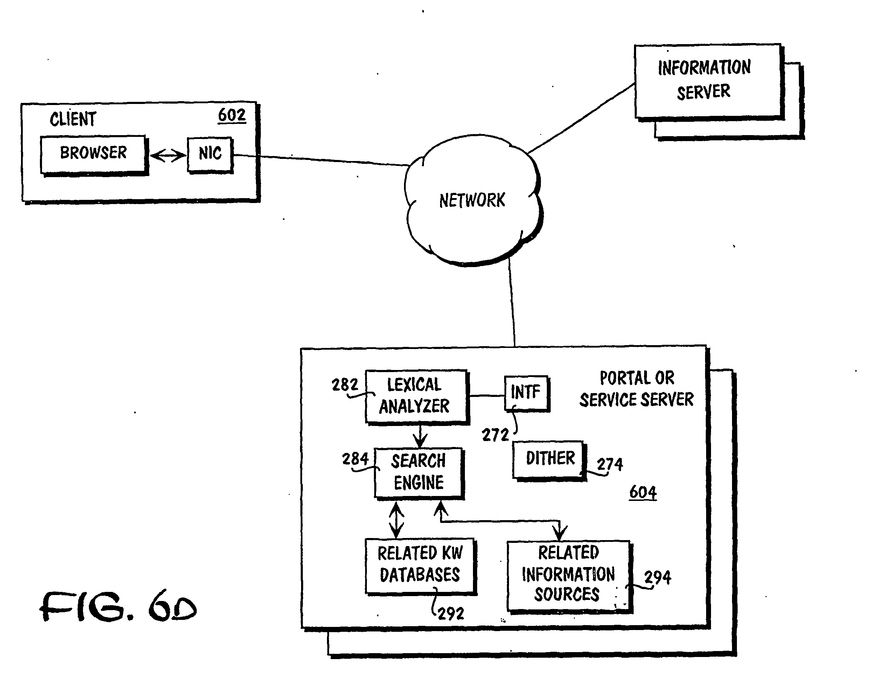

The embodiment of **Fig. 6d** represents yet another alternate embodiment, where all the relevant earlier described elements, i.e. interface and dither modules **272** and **274,** lexical analyzer **282,** search engine **284,** and databases **292** and **294** are all disposed on one or more portal or service server **604** instead. During operation, browser **100** would keep interface **272** informed of the identity of the information page being browsed (e.g. in the case of a web page, providing interface **272** with the web page's URL). Interface **272** causes server **604** to obtain its own copy of the information page. Therefore, lexical analyzer **282** and search engine, would all function (using databases **292** and **294)** as described earlier, leading to the eventual provision of the information source identifiers to client **602.**

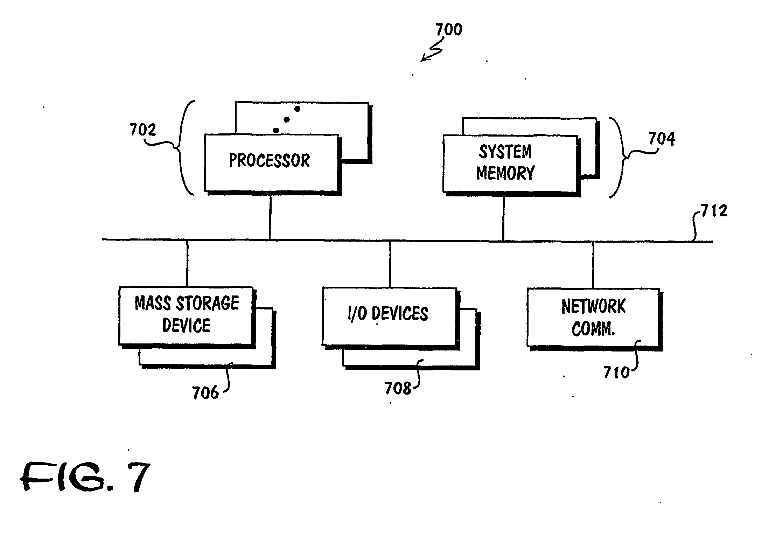

**Figure 7** illustrates one embodiment of an exemplary digital system suitable for use to practice the present invention, either as a client system or a server system. As a client system, digital system **700** may be a desktop computer system, a laptop computer system, a palm sized computing device, a set-top box, an Internet appliance and the like. As a server, digital system **700** may a single or a cluster of computer systems. As shown, exemplary digital system **700** includes one or more processors **702** and system memory **704.** Additionally, system **700** includes mass storage devices **706** (such as diskette, hard drive, CDROM and so forth), input/output devices **708** (such as keyboard, cursor control and so forth) and communication interfaces **710** (such as network interface cards, modems and so forth). The elements are coupled to each other via system bus **712,** which represents one or more buses. In the case of multiple buses, bridged by one or more bus bridges (not shown). Each of these elements perform its conventional functions known in the art. In particular, system memory **704** and mass storage **706** are employed to store a working copy and a permanent copy of the programming instructions implementing the teachings of the present invention. The permanent copy of the programming instructions may be loaded into mass storage **706** in the factory, or in the field, as described earlier, through a distribution medium (not shown) or through communication interface **710** (from a distribution server (not shown). The constitution of these elements **702-712** are known, and accordingly will not be further described.

Thus, a novel method and apparatus for dynamically assisting a user in information retrieval and browsing, based on the content of an information page has been described. While the present invention has been described in terms of the above illustrated embodiments, those skilled in the art will recognize that the invention is not limited to the embodiments described. The description is thus to be regarded as illustrative instead of restrictive on the present invention.

## Claims

1. An automated method performed in a server system (604) for facilitating provision of assistance to a user of a networked client system (602) to retrieve and browse information, the method being **characterized by** comprising:
receiving from said client system (602) dynamically determined related second keywords (308) of presence ones of first keywords (306) in a first information page (108) being browsed on said client system (602); and
in response, providing to said client system (602) a plurality of information source identifiers (106) identifying a plurality of information sources (328), based at least in part on said received related second keywords (308).

2. The method of claim 1 further comprising:
receiving from another client system (602) a locator of another first information page (108) being browsed on said another client system (602); and
in response, providing to said another client system (602) another plurality of information source identifiers (106) identifying another plurality of information sources (328), based at least in part on dynamically determined content of the another first information page (108).

3. The method of claim 1 further comprising:
receiving from another client system (602) dynamically determined unique nouns of another first information page (108) being browsed on said another client system (602); and
in response, providing to said another client system (602) another plurality of information source identifiers (106) identifying another plurality of information sources (328), based at least in part on said received unique nouns.

4. The method of claim 1 further comprising:
receiving from another client system (602) another dynamically determined presence ones of first keywords (306) in the another first information page (108) being browsed on said another client system (602); and
in response, providing to said another client system (602) another plurality of information source identifiers (106) identifying another plurality information sources (328), based at least in part on said received another dynamically determined presence ones of first keywords (306).

## Patentansprüche

1. Automatisiertes Verfahren, das in einem Serversystem (604) ausgeführt wird, zur Erleichterung der Bereitstellung von Unterstützung für einen Benutzer eines vernetzten Clientsystems (602) bei dem Abrufen und Durchsuchen von Informationen, wobei das Verfahren **dadurch gekennzeichnet ist, daß** es
das Erhalten dynamisch bestimmter zugehöriger zweiter Schlüsselwörter (308) für auf einer ersten Informationsseite (108), welche auf dem Clientsystem (602) durchsucht wird, vorliegende Schlüsselwörter von ersten Schlüsselwörtern (306) von dem Clientsystem (602); und
als Antwort, das Versorgen des Clientsystems (602) mit einer Vielzahl von Informationsquellenidentifikatoren (106), die eine Vielzahl von Informationsquellen (328) identifizieren, basierend zumindest teilweise auf den erhaltenen zugehörigen zweiten Schlüsselwörtern (308)
aufweist.

2. Verfahren nach Anspruch 1, das weiter
das Erhalten eines Locators einer weiteren ersten Informationsseite (108), die auf einem anderen Clientsystem (602) durchsucht wird, von dem anderen Clientsystem (602); und
als Antwort, das Versorgen des anderen Clientsystems (602) mit einer weiteren Vielzahl von Informationsquellenidentifikatoren (106), die eine weitere Vielzahl von Informationsquellen (328) identifizieren, basierend zumindest teilweise auf dynamisch bestimmtem Inhalt der weiteren ersten Informationsseite (108)
aufweist.

3. Verfahren nach Anspruch 1, das weiter
das Erhalten von dynamisch bestimmten eindeutigen Substantiven einer weiteren ersten Informationsseite (108), die auf einem anderen Clientsystem (602) durchsucht wird, von dem anderen Clientsystem (602); und
als Antwort, das Versorgen des anderen Clientsystems (602) mit einer weiteren Vielzahl von Informationsquellenidentifikatoren (106), die eine weitere Vielzahl von Informationsquellen (328) identifizieren, basierend zumindest teilweise auf den erhaltenen eindeutigen Substantiven
aufweist.

4. Verfahren nach Anspruch 1, das weiter
das Erhalten weiterer dynamisch bestimmter, auf der weiteren ersten Informationsseite (108), welche auf einem anderen ersten Clientsystem (602) durchsucht wird, vorliegender Schlüsselwörter von ersten Schlüsselwörtern (306) von dem anderen Clientsystem (602); und
als Antwort, das Versorgen des anderen Clientsystems (602) mit einer weiteren Vielzahl von Informationsquellenidentifikatoren (106), die eine weitere Vielzahl von Informationsquellen (328) identifizieren, basierend zumindest teilweise auf den erhaltenen weiteren dynamisch bestimmten vorliegenden Schlüsselwörtern von ersten Schlüsselwörtern (306)
aufweist.

## Revendications

1. Procédé automatisé mis en ouvre dans un système serveur (604) pour faciliter la prestation d'une assistance auprès d'un utilisateur d'un système client en réseau (602) en vue de l'extraction et de la consultation d'informations, le procédé étant **caractérisé en ce qu'**il comprend :
la réception, de la part dudit système client (602), de seconds mots clés (308) déterminés de manière dynamique apparentés à ceux des premiers mots clés (306) présents sur une première page d'information (108) en cours de consultation sur ledit système client (602) ; et
en réponse, la fourniture audit système client (602) d'une pluralité d'identificateurs de sources d'information (106) identifiant une pluralité de sources d'information (328), en se fondant au moins en partie sur lesdits seconds mots clés (308) apparentés reçus.

2. Procédé selon la revendication 1, comprenant en outre :
la réception, de la part d'un autre système client (602), d'un localisateur d'une autre première page d'information (108) en cours de consultation sur ledit autre système client (602) ; et
en réponse, la fourniture audit autre système client (602) d'une autre pluralité d'identificateurs de sources d'information (106) identifiant une autre pluralité de sources d'information (328), en se fondant au moins en partie sur le contenu déterminé de manière dynamique de l'autre première page d'information (108).

3. Procédé selon la revendication 1, comprenant en outre :
la réception, de la part d'un autre système client (602), de noms uniques, déterminés de manière dynamique, d'une autre première page d'information (108) en cours de consultation sur ledit autre système client (602) ; et
en réponse; la fourniture audit autre système client (602) d'une autre pluralité d'identificateurs de sources d'information (106) identifiant une autre pluralité de sources d'information (328), en se fondant au moins en partie sur lesdits noms uniques reçus.

4. Procédé selon la revendication 1, comprenant en outre :
la réception, de la part d'un autre système client (602), d'autres mots clés déterminés de manière dynamique parmi les premiers mots clés (306) présents sur l'autre première page d'information (108) en cours de consultation sur ledit autre système client (602) ; et
en réponse, la fourniture audit autre système client (602) d'une autre pluralité d'identificateurs de sources d'information (106) identifiant une autre pluralité de sources d'information (328), en se fondant au moins en partie sur lesdits autres mots clés présents, déterminés de manière dynamique parmi les premiers mots clés (306), qui ont été reçus.
